Europäisches Patentamt

European Patent Office

Office européen des brevets

(11) Publication number: **0 059 306**
A2

# (12) EUROPEAN PATENT APPLICATION

(21) Application number: **82100314.2**

(22) Date of filing: **18.01.82**

(51) Int. Cl.³: **F 27 B 9/20**
**F 27 D 3/02, B 65 G 25/02**

(30) Priority: **23.01.81 IT 1241881**
**09.12.81 IT 1270281**

(43) Date of publication of application:
**08.09.82 Bulletin 82/36**

(84) Designated Contracting States:
**AT BE CH DE FR GB LI LU NL SE**

(71) Applicant: ITALIMPIANTI Società Italiana Impianti P.a.
Piazza Piccapietra, 9
I-16124 Genova(IT)

(72) Inventor: Feroldi, Bruno
17/6 Passo Stefano Sanguineti
I-16147 Genova(IT)

(74) Representative: Porsia, Attilio et al,
c/o Succ. Ing. Fischetti & Weber Via Caffaro 3
I-16124 Genova(IT)

(54) Walking beam furnace.

(57) The walking beam furnace for heating metallurgical articles such as billets, at its discharge end, downstream of the zone occupied by the walking beams, comprises a storage zone (17) formed in part by an uninterrupted sole for the heated metallurgical articles (B), and in this heated storage zone (17) said articles are laid down and are advanced by the pushing action of the walking beams (2), so-called pushing beams, which are provided for this purpose with at least one pushing head (23), suitable means being provided to discharge one or more metallurgical articles at a time from said storage zone (17).

Fig.1

EP 0 059 306 A2

0059306

## Walking beam furnace

The present invention relates to the walking beam furnaces for heating metallurgic materials, such as billets, blooms and the like.

In the known furnaces of this type, the metallurgic materials to be heated are withdrawn by said walking beams, one by one, from a line of feed rollers at the furnace inlet and, after being conveyed through the furnace, are laid down by the same walking beams, one by one, on a line of discharge rollers at the furnace outlet, wherefrom they will be conveyed to a subsequent rolling mill which is fed by the furnace. The lines of feed and discharge rollers extend within the furnace transverse to said beams, while said walking beams move between the rollers of these lines of rollers.

This embodiment of the heretofore known walking beam furnaces can discharge only one heated metallurgical article at each step of the furnace mechanism. As a consequence, the delivery of the heated metallurgic articles to a rolling mill depends upon the regularity of the movement through the furnace. Therefore, the feeding of heated articles to a rolling mill will cease when the movement of the articles through the furnace is discontinued even for a single operative cycle of the walking beams. Moreover, the multiple-lines rolling mills cannot be fed in parallel by said furnaces.

The object of this invention is to overcome said drawbacks of the known walking beam furnaces, and the invention aims to provide a continuous feeding of a rolling mill located downstream of the furnace, even in case of short interruptions in the conveyance of the metallurgic articles through the furnace, thus permitting even the continuous feeding of multiple-lines rolling mills.

This problem is solved by the invention by providing, at the discharge side of the furnace, downstream of the region containing the walking beams, a storage zone for the heated metallurgic articles. In this zone, the articles are laid down and are advanced by the pushing action of at least two of the walking beams, called pushing beams, and provided for this purpose with a pushing head, suitable means being provided to discharge one or more articles at a time from said storage zone.

Thus, according to the invention, on the storage zone at the discharge end of the walking beam furnace, a plurality or stock of heated metallurgic articles are stored, ready to be discharged. This storage stock ensures a continuous feeding of the rolling mill associated with the furnace in case the conveyance of the articles through the furnace should stop for a short period, or in case the feeding of the articles to the furnace should cease during a few operative cycles of the walking beams. Moreover, said storage stock of heated metallurgic articles in the end storage zone of the furnace permits a continuous feeding of a multiple-lines rolling mill. In both cases, the heated articles available to be discharged from the storage zone are maintained in a high-temperature environment as long as possible. Moreover, the line of discharge rollers at the discharge end of the furnace is eliminated.

According to a preferred modification of the invention, the storage zone for the heated metallurgic articles and/or the respective pushing head of the walking beams are so constructed as to lay down and push forward two or more metallurgic articles at each step or cycle of movements of the walking beams on the storage zone. This permits to reduce the operative speed of the walking beams, that is the rate of movement of the cycles thereof.

The storage zone for the heated metallurgic articles at the end discharge portion of the furnace can be constructed in any suitable manner and, for example, it can comprise an uninterrupted sole and/or stationary spaced apart beams.

The means for discharging the heated metallurgic articles from the end storage portion of the furnace can also be constructed in various manners and, for example, can comprise one or more pushers for axial ejection of the heated articles through a side door of the furnace.

The pushing head of the pushing beams, designed to advance by pushing the metallurgic articles laid down by the walking beams on the end storage zone of the furnace, can also be constructed in any suitable manner, depending upon the type of the walking beam furnace.

Thus, for example, in case of furnaces with unilateral heating, in which the beams are not cooled and are provided with a refractory lining, the pushing head of each pushing beam comprises at least a metal block fixed in heat-exchange relationship to a metal structure of tubular members which, in turn, is fixed to the carrying structure of the respective walking beam and is cooled by means of water or other fluid. In this instance, the metal block forming the pushing head of each pushing beam is, therefore, cooled through a suitable cooled carrying structure.

In case of furnaces with bilateral heating, in which the beams are cooled by means of water or other fluid, the pushing head of each pushing beam comprises at least a metal block fixed to the respective cooled walking beam in heat-exchange relationship therewith. In this instance, therefore, the metal block forming the pushing head of each pushing beam is cooled directly by the respective cooled beam.

In both instances, the metal blocks forming the pushing heads of the pushing beams are, preferably, of a metal alloy that maintains a good mechanical strenght at temperatures of the order of the discharge temperature of the heated metallurgic articles, and the cooling of said metal blocks by means either of the cooled carrying structures or of the respective cooling beams is effected to such an extent as to maintain said metal blocks at a temperature which is substantially the same as that of discharge of the heated articles. Therefore, the pushing heads of the pushing beams will cause no local cooling of the heated metallurgic articles at the zones where they will contact therewith to push them to the storage zone and advance them thereon, so as to avoid any formation of black spots on said heated articles.

These and other features of the invention and the advantages resulting therefrom will be more apparent from the following description of two preferred embodiments, shown as non limiting examples in the accompanying drawings, in which:

Figure 1 is a vertical longitudinal sectional view of a walking beam furnace with unilateral heating, according to the invention;

Figures 2, 3 and 4 are sectional views similar to Figure 1, showing the end portion of the furnace at the discharge side thereof, with three successive positions of the walking beams pushing a billet to the storage zone, respectively;

Figures 5, 6 and 7 are front, side and top views, respectively, of the structure constituting the pushing head of a pushing beam;

Figure 8 is a diagrammatic vertical longitudinal sectional view of the end portion of a walking beam furnace with bilateral heating, according to the invention;

Figures 9, 10 and 11 are sectional views similar to Figure 8 showing the end portion of the furnace, with three successive positions of the walking beams pushing a billet to the storage zone, respectively.

The drawings show two embodiments of a walking beam furnace for billets, blooms and the like. These furnaces will be described, by way of example, as used to heat billets, without so excluding their use with blooms and other similar metallurgic articles. Walking beam furnaces feed, usually, a successive rolling mill (not shown), that can also be a multiple-lines rolling mill.

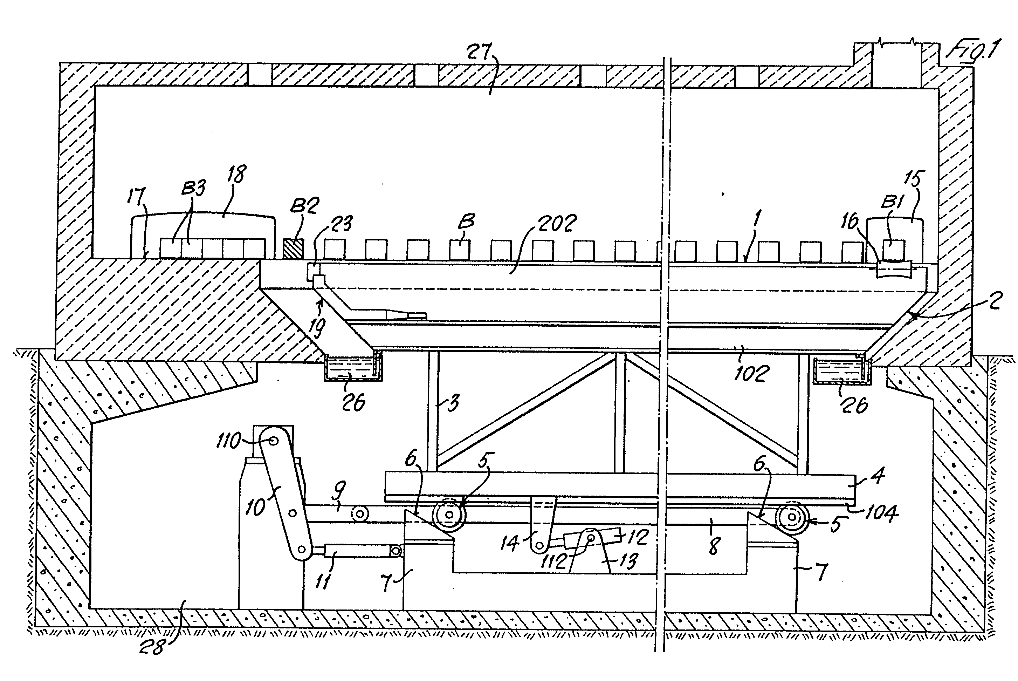

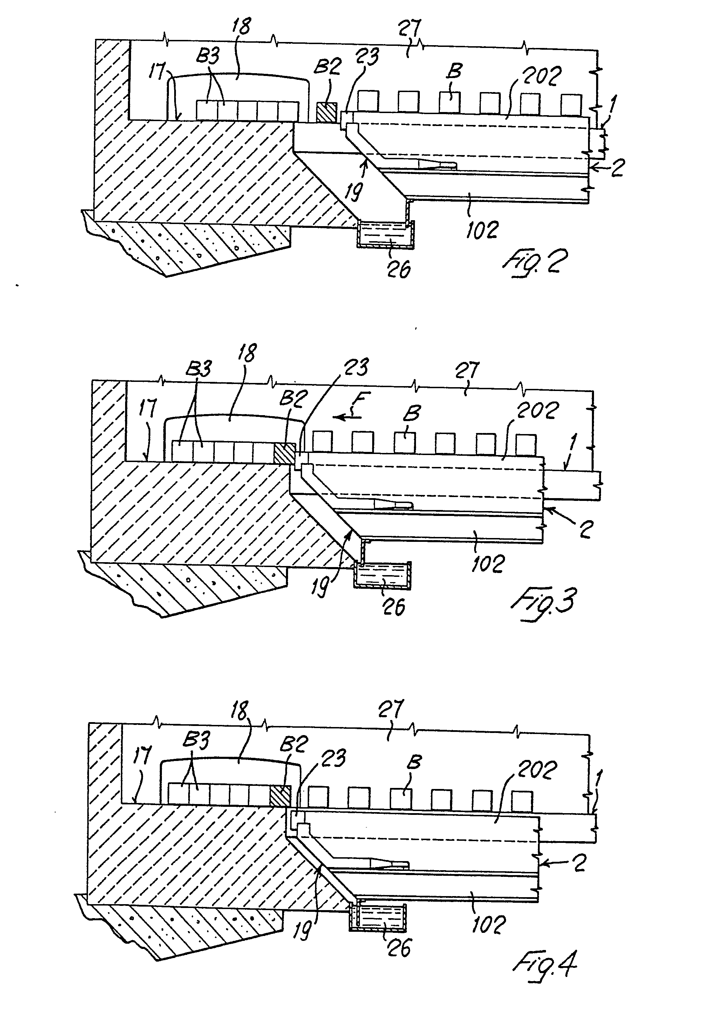

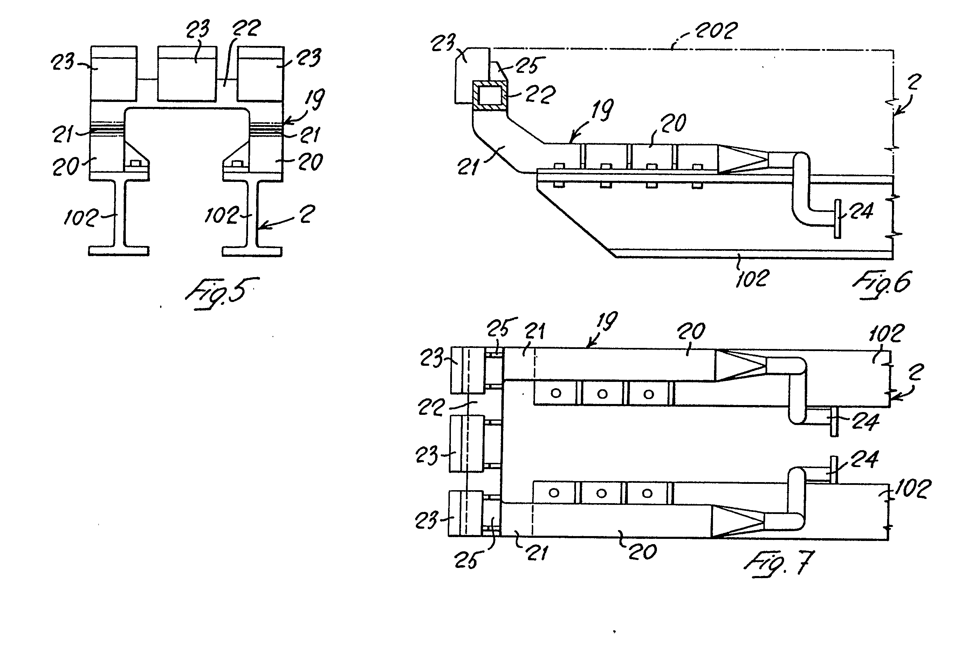

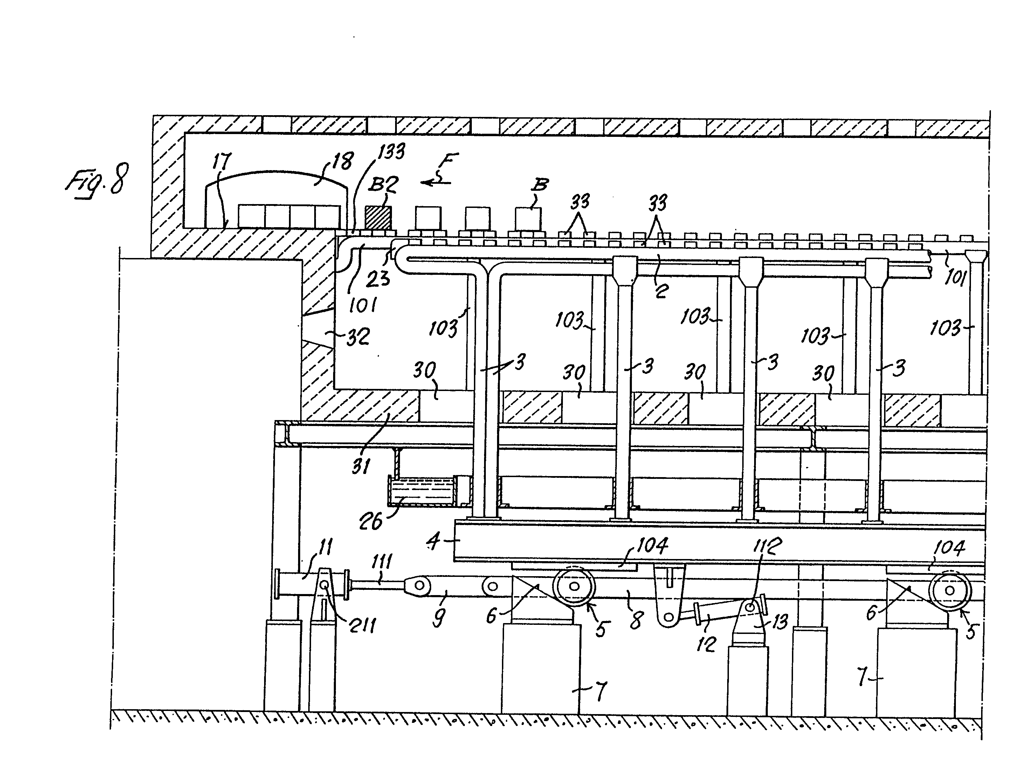

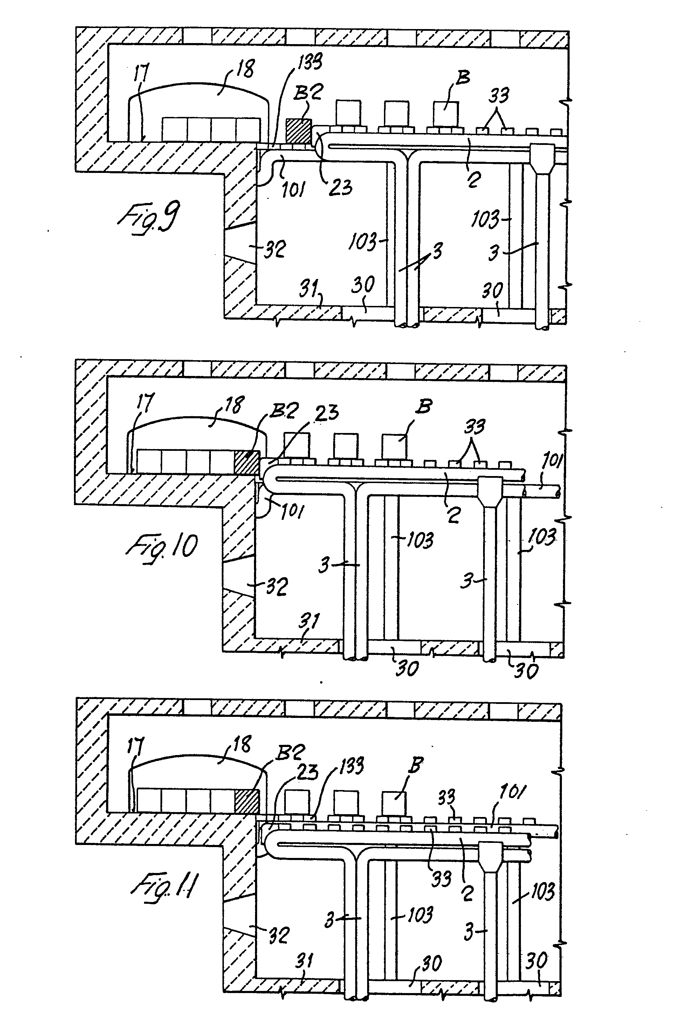

Figures 1 to 7 show a walking beam furnace with unilateral heating, in which the burners are located only in the space above the beams. In these Figures, the numeral 1 indicates the stationary hearth of the furnace, which is formed with spaced apart longitudinal openings for accommodating the walking beams 2, each formed by a metallic lower carrying structure 102 and an upper refractory lining 202. The walking beams can be moved upwards and downwards so as to assume alternately an upper position (Figures 2 and 3) wherein they protrude upwards from the surface of the stationary hearth 1 of the furnace and carry the billets B, and a lower position (Figures 1 and 4)wherein they retract beneath the surface of the stationary hearth 1 and lay down the billets B on said stationary hearth 1. Moreover, said walking beams 2 can be moved horizontally back and forth in a longitudinal direction. In the illustrated embodiment, these two possible movements of the walking beams 2 are effected as follows:

The walking beams 2 are fixed by means of a supporting frame 3 to a lower mobile bed 4 resting, through carriages 5, on stationary inclined planes 6 integral with respective foundations 7. The carriages 5 are connected to each other by longitudinal rods 8, which are pivoted, through a link 9, to a rocking arm 10 which, in turn, is pivoted to a stationary shaft 110 and is actuated by a hydraulic cylinder 11. The carriages rest on inclined planes 6 through rolling wheels, and are provided with idle supporting wheels which are co-axial with said rolling wheels and which slidingly support said bed 4 through longitudinal lower rails 104. The vertical up-and-down movements of the walking beams 2 are effected by moving the carriages 5 horizontally by means of the hydraulic cylinder 11 and rocking arm 10 on the respective inclined planes 6. The horizontal longitudinal back-and-forth movements of the walking beams 2 are effected by another hydraulic cylinder 12 pivotably mounted about a shaft 112 on a supporting stand 13 secured to the foundations, and pivotably connected to a lower arm 14 depending from the mobile bed 4.

The introduction of the billets B to be heated into the furnace is effected through a side door 15 by means of a line of rollers 16 which extends into the furnace over the whole width thereof and transverse to the walking beams 2. Ahead of these beams and in line therewith, the rollers of the line of rollers 16 are spaced apart, so that said walking beams 2 can each pass through the space formed between two adjacent rollers of the line of rollers 16.

On the opposite, discharge side of the furnace, the invention provides a billet storage zone formed by an uninterrupted sole 17 co-planar and merging with the stationary hearth 1 between the walking beams 2. A side discharge door 18 is formed at this storage zone 17.

The end of at least one, or of two or more walking beams 2 facing said storage zone 17 on the discharge side, is provided with a pushing head, best shown in Figures 5 to 7. In these Figures, for simplification purposes, only the metal carrying structure 102 of a walking beam 2 is shown, and the refractory lining thereof 202 is shown by dash-and-dot lines. The pushing head is formed by a tubular metallic U-shaped structure 19, the parallel horizontal arms 20 of which are fixed, by means of bolts and/or welded abutments, to a pair of H-shaped beams forming the carrying structure 102 of the walking beam 2. At the end of the walking beam 2, the two arms of the U-shaped structure 19 comprise upward directed portions 21 carrying the tranverse member 22. Suitable metallic spaced apart pushing blocks 23, for example of a cobalt alloy, or the like, are fixed, for example welded, to said transverse member 22. Said pushing blocks 23 have top sides flush with the top surface of the refractory lining 202 of the walking beam 2, and protrude forwards from the front surface thereof. The connection of the pushing blocks 23 and transverse member 22 of the U-shaped structure can be strengthened by stainless steel gussets 25 welded to these elements.

The tubes of the pushing head structure 19 are of either square or rectangular cross-section, but can also be of circular cross-section. In the first two cases, the tubes can be formed by either seamless tubes or by welded tubes. In either case, the tubular structure 19 of the pushing head is perfectly water-tight and is connected at the free ends 24 of the arms 20 to a cooling circuit adapted to circulate a coolant, such as treated water, industrial water or the like, through said head 19. The walking beams 2 provided with the pushing heads 19 will be called pushing beams, due to their particular action as will be apparent from the following description of the operation of the walking beam furnace.

Starting from the lowered position of the walking beams, that is the position wherein they are retracted towards the inlet end of the furnace (see Figure 1), the walking beams 2 are raised so as to pick up the billets B from the stationary

- 10 -

0059306

hearth 1 of the furnace and a just-entered billet B1 supported on the line of rollers 16 (this position being shown in Figure 2). The raised walking beams 2 are then moved forwards towards the discharge side of the furnace, so as to advance by one step the billets B and B1 resting on said walking beams (Figure 3). At the same time, the pushing beam or beams will push, with the pushing blocks 23 thereof, by a corresponding step, the last billet B2 laid down during the preceding cycle of movement on the stationary hearth 1 of the furnace, in front of the end storage zone formed by the uninterrupted sole 17, as shown in Figure 3. Thus, said last billet B2, shown hatched in Figures 1 to 4, is pushed on the stationary hearth 1 and slided onto the stationary sole 17 forming the storage zone. The walking beams then move downwards and lay down on the stationary hearth 1 the billets B, B1 carried thereon, as shown in Figure 4. Finally, the thus lowered walking beams 2 move bach towards the inlet side of the furnace again to the starting position shown in Figure 1.

The hereinbefore described cycle of movements of the walking beams 2 will be repeated at a predetermined rate. At each cycle, the billets B are advanced one step in the direction of the arrow F, while on billet B1 is picked up from the line of rollers 16 at the inlet end and laid down on the stationary hearth 1 of the furnace, and the last billet B2 at the outlet end of the furnace, laid down by the walking beams on the stationary hearth 1, is pushed by the pushing beam or beams 2 onto the storage zone formed by the uninterrupted sole 17. Thus, on the sole 17 in the storage zone at the outlet end, a storage stock will be formed comprising a number of billets B3 that will be advanced by pushes when each new billet B2 is fed onto said sole 17 by the pushing beams 2. The billets B3 forming the storage stock in the storage zone 17 are discharged one or more at a time through the side door 18 and with the aid of any suitable discharging device, for example axial pushers (not shown).

Hydraulic seals 26 are arranged between the walking beams and the stationary portion of the furnace in order to separate the upper heating chamber 27 of the furnace from the underlying chamber 28 containing the actuating mechanism for the walking beams 2.

In Figures 8 to 11 is shown a walking beam furnace with bilateral heating, that is wherein the burners are located both above and below the beams. In this furnace, the numeral 101 indicates the stationary beams, and the numeral 2 indicates the walking beams of the furnace. At least in the end portion of the furnace, the stationary beams 101 and the walking beams 2 are of tubular formation and are cooled in a conventional manner by circulation of water or other coolant. The walking beams 2 can be moved upwards and downwards so as to assume alternately an upper position (Figures 9 and 10) in which they protrude upwards from the supporting surface defined by the stationary beams 101 and carry the billets B, and a lower position (Figures 8 and 11) wherein they retract beneath the supporting surface defined by the stationary beams 101 and lay down the billets B on said stationary beams 101. Moreover, said walking beams can be moved horizontally back and forth in a longitudinal direction. In the illustrated embodiment, these two possible movements of the walking beams 2 are effected as follows:

The walking beams 2 are carried by tubular columns 3, also cooled by means of water or any other suitable fluid and passing through slots 30 formed in the bottom 31 of the furnace. The slots 30 are elongated in the longitudinal direction of the beams 101 and 2. Said columns 3 are fixed to a lower mobile bed 4 resting through carriages 5 on stationary inclined planes 6 and integral with respective foundations 7. Said carriages 5 are connected to each other by longitudinal rods 8 which are pivoted, through a link 9, to a rod 111 of a hydraulic cylinder 11 pivotably mounted at 211. The carriages 5 can rest on the inclined planes 6 through rolling wheels and are provided with idle supporting wheels which are co-axial with said rolling wheels and which slidingly support said bed 4 through longitudinal lower rails 104. The vertical up-and-down movements of the walking beams 2 are effected by moving the carriages 5 horizontally by a hydraulic cylinder 11 on the respective inclined planes 6. The horizontal longitudinal back-and-forth movements of the walking beams 2 are effected by another hydraulic cylinder 12 pivotably mounted on the shaft 112 of a supporting stand 13 secured to the foundations and pivotably connected to said mobile bed 4.

The stationary beams 101 are also supported by tubular stationary columns 103, cooled by means of water or other fluid, and secured, for example, to the bottom 31. Burners 32 are also arranged below the beams 101, 2, so as to achieve a bilateral heating of the billets B. The billets B are supported by the beams 101, 2 through the interposed spaced apart blocks 33 secured to said beams 101, 2.

A storage zone for the billets is formed at the discharge side of the furnace and comprises an uninterrupted sole 17 merging and co-planar with the supporting surface for the billets, defined by said stationary beams 101. In registry with this storage zone 17 is a side discharge door 18.

The end of at least one, or of two or more walking beams 2 facing the storage zone 17 on the discharge side, is provided with a pushing head formed by a protruding metal block 23. These pushing metal blocks 23 are made of a special alloy that maintains a good mechanical strength at temperatures of the order of that of the billets B ready to be discharged. Moreover, said pushing metal blocks 23 are secured, for example welded, to the respective walking beams 2, so as to ensure a good heat dissipation and therefore a good cooling of the pushing blocks 23 through the respective walking beams 2. During the operation of the furnace, the temperature of the pushing blocks 23 is, preferably, substantially the same as that of the billets B to be discharged from the furnace. The metal pushing blocks 23 are made, for example, of a cobalt alloy or the like. These pushing blocks 23 have a top side flush with the supporting surface of the walking beams 2 for the billets B, and they project forwards from the front end of these beams. The walking beams 2 provided with pushing heads will be called pushing beams due to their particular action as will be apparent from the following description of the operation of the just described walking beam furnace.

Starting from the lowered position of the walking beams, that is the position wherein they are retracted towards the inlet end of the furnace (see Figure 8), the walking beams are raised so as to pick up the billets B from the stationary beams 101 (this position being shown in Figure 9). The raised walking beams 2 are then moved forwards towards the discharge side of the furnace, so as to advance by one step the billets B resting on said walking beams (Figure 10). At the same time, the pushing beams 2 push by a corresponding step, with the pushing blocks 23 thereof, the last billet B2 laid down during the preceding cycle of movement on the end portion of the stationary beams 101, in front of the end storage zone defined by the stationary uninterrupted sole 17, as shown in Figures 9 and 10. Thus, said last billet B2, shown hatched in Figures 8 to 11, is slided on the stationary beams 101 and advanced onto the stationary sole 17 forming the storage zone. The walking beams 2 then move downwards and lay down on the stationary beams 101 the billets B carried thereon, as shown in Figure 11. Finally, the thus lowered walking beams 2 move b𝗓ack towards the inlet side of the furnace again to the starting position shown in Figure 8.

The described cycle of movements of the walking beams 2

0059306

will be repeated at a predetermined rate. At each cycle, the billets B are advanced one step in the direction of the arrow F, while the last billet B2 at the discharge side of the furnace, laid down by the walking beam 2 onto the stationary beams 101, is pushed by the pushing beam or beams 2 by the action of the heads 23 thereof onto the storage zone formed by the stationary uninterrupted sole 17. Thus, on the sole 17 in the storage zone at the outlet end, a storage stock will be formed comprising a number of billets that will be advanced by pushes by each new billet B2 being fed to said sole 17 by the action of said pushing beams 2. The billets forming the storage stock in the storage zone 17 are discharged one or more at a time through the side door 18 and with the aid of any suitable discharging divice, for example axial pushers (not shown).

Hydraulic seals 26 are arranged between the walking beams and the stationary portion of the furnace in order to separate the upper heating chamber of the furnace from the underlying chamber containing the actuating mechanism for the walking beams 2.

Obviously, the invention is not limited to the embodiments here shown and described, but various changes and modifications can be made thereto, particularly as for the construction and the operational and technical equivalents. Thus, for example, in both the illustrated embodiments, the operation whereby at each cycle of movements of the walking beams 2 on the storage zone 17 only one single billet is pushed, is not to be considered as a limitation because in fact by suitably adjusting the horizontal stroke of the waking beams on the storage zone 17, two or more billets or the like can be pushed at a time. In the embodiment according to the Figures 8 to 11, at the end portion of the stationary beams 1, in a region just preceding the storage zone 17, the blocks 33, rather than spaced apart, can be arranged adjacent to each other so as to form an uninterrupted region 133 to prevent possible stumbling of the billets or the like during the conveyance thereof. This series 133 of blocks 33 adjacent to each other on the stationary beams 1 can be replaced by one single block of the same length. The lower burners 32 can be arranged either in the front wall of the furnace, a shown in the Figures 8 to 11, or in the side walls of the furnace.

0059306

C L A I M S

1. A walking beam furnace for heating metallurgical articles such as billets, blooms and the like, characterized by the fact that at the discharge end, downstream of the zone occupied by the walking beams, said furnace comprises a storage zone (17) for the heated metallurgical articles (B), and in this heated storage zone (17) said articles are laid down and are advanced by the pushing action of at least two of the walking beams (2), so-called pushing beams, provided for this purpose with at least one pushing head (23), suitable means being provided to discharge one or more metallurgical articles at a time from said storage zone (17).

2. A walking beam furnace according to claim 1, characterized by the fact that at each cycle of movements of the walking beams (2), on the storage zone (17) two or more metallurgical articles (B) at a time are laid down and advanced.

3. A walking beam furnace according to any of claims 1 or 2, characterized by the fact that said storage zone (17) is formed at least in part by an uninterrupted sole.

4. A walking beam furnace according to any of claims 1 or 2, characterized in that said storage zone (17) is formed at least in part by stationary spaced apart beams.

5. A walking beam furnace with unilateral heating comprising non-cooled beams provided with a refractory lining, according to claim 1, characterized by the fact that the pushing head (23) of each pushing beam (2) is formed by at least one metal block secured in heat-exchange relationship to a metal structure of tubular members, in turn secured to the carrying structure of the respective walking beam and is cooled by means of water or other fluid.

6. A walking beam furnace according to claim 5, characterized by the fact that the pushing head (23) of each pushing beam comprises a metallic tubular U-shaped structure (19) cooled by circulating therethrough a suitable fluid, usually water, and secured to the metallic carrying structure of the respective pushing beam so that the transverse member (22) of said U-shaped structure, provided with metallic spaced apart pushing blocks, forms the end pushing edge of the respective pushing beam.

7. A walking beam furnace with bilateral heating and with beams cooled by means of water or other fluid, according to claim 1, characterized by the fact that the pushing head (23) of each pushing beam comprises at least a metallic block secured to the respective cooled walking beam (2) in heat-exchange relationship therewith.

8. A walking beam furnace according to any of claims 5 or 7 characterized in that the metallic blocks of the pushing heads are welded to the respective cooled carrying structures or to the respective cooled walking beams.

9. A walking beam furnace according to any of claims 5 or 7 characterized in that the metallic blocks forming the pushing heads (23) of the pushing beams (2) are made of a metal alloy that maintains a good mechanical strength substantially at temperatures of the order of the discharge temperature of the heated metallurgic articles, and the cooling of said metallic blocks through the respective cooled carrying structures or the respective cooled walking beams is effected to such an extent as to maintain said metallic blocks at a temperature which is substantially the same as the discharge temperature of the heated metallurgic articles.

10. A furnace according to claim 7, in which said metallurgical articles rest on stationary beams (101) and walking beams (2) through the intermediary of suitably spaced apart blocks (33), characterized by the fact that at the end portion of the stationary beams (101), just before the storage zone (17), said blocks are adjacent to one another or are replaced by a single elongated block.

Fig.1

0059306

Fig. 2

Fig. 3

Fig. 4

Fig.5

Fig.6

Fig.7

Fig.8

0059306

4/5

Fig. 9

Fig. 10

Fig. 11